# NEW EUROPEAN PATENT SPECIFICATION

(11) **EP 0 169 698 B2**
(45) Date of publication and mention of the opposition decision: **25.08.1993**
(45) Mention of the grant of the patent: 14.11.1990
(21) Application number: 85305030.0
(22) Date of filing: 15.07.1985
(51) Int. Cl.: B07B 1/46

(54) **Improvements in filtering screens**
Filtersiebe
Tamis filtrants

(30) Priority: 21.07.1984 GB 8418658; 04.04.1985 GB 8508892
(43) Date of publication of application: 29.01.1986
(73) Proprietor: Thule United Limited, Aberdeen AB1 2LP Scotland (GB)
(72) Inventor: Bailey, Marshall Graham, Aberdeen Scotland (GB)
(74) Representative: Nash, Keith Wilfrid

(56) References cited:
- DE-C- 602 110
- FR-A- 2 047 758
- FR-A- 2 407 026
- GB-A- 743 902
- GB-A- 743 902
- GB-A- 1 526 663
- GB-A- 2 113 121
- US-A- 4 348 284

## Description

### Field of Invention

This invention relates to screens for use in a filtering process, especially for filtering a particle-containing suspension or a slurry.

### Background to the Invention

Commonly, in filtering processes generally of the kind referred to, a plurality of differently-sized mesh filter elements are mounted one above the other in a vibratory cradle or the like. Each wire mesh screen may be tensioned across the cradle by use of fixing hooks. Alternatively, each single mesh screen may be mounted and possibly stretched within a screen insertable into the cradle.

It is known from GB-A-1526663 to construct a screen for use in a vibratory screening apparatus from a frame within which various screen cloths are stretched. With this arrangement, by careful choice of screen cloth mesh size and the positioning of one screen cloth above another over curved inner frame members, so an improved vibratory screen is produced which suffers less from clogging than previously designed screens.

It is of course necessary to ensure a high level of tension in the screen cloths and this is achieved in the earlier design of GB-A-1526663 by the use of curved stringers which cause the stretched cloth to form an arched configuration.

In this first design, there is little tendency for particles to lodge in the space between the interstices of the screen cloths due to slight relative movement between the cloths as a result of the vibration to which the screen cloths are subjected during the screening opeations. Such vibrations tend to cause the upper screen cloth to move slightly relative to the lower screen cloth thereby enabling particles to fall therethrough, as described at line 40 on page 3 of said Specification No. 1526663. the self-cleaning feature claimed for this screen appears to be achieved by relative vibratory movement in the plane of extent of the two screen cloths, as the screen is vibrated. This relative movement is brought about by the arched condition of the screen cloths and the fact that one overlies the other.

It is also known from FR-A-2407026 to have a filtering screen comprising a first filter mesh, a second filter mesh overlying the first mesh, and having a different mesh size therefrom, and an apertured support to which both of the meshes are bonded so as to maintain the two meshes in tension, the tension in one of the meshes being greater than that in the other. As opposed to the invention the general framing and support structure is constituted by angle and T-section bars.

The simpler form of construction of this second design allows differential tensions to be achieved in that the screen cloths are stretched to whatever tension is required and located in place on the frame by means of a suitable adhesive which retains the differential tensions in the screen cloths.

DE-B-1209856 discloses a vibratory screen in which the screen support frame (S) is impulsed and is therefore formed from elastically resilient material such as cast, molded or welded plastics. The cross-section of the members (1,2) making up the grid of the support frame (S) is generally U-shaped to provide a coverfor the moving (impulsing) parts (4) and (8) etc. The U shape will also increase the rigidity of the frame. However, such a frame will not withstand the tensions in the differently tensioned meshes such as are required in screens of the type shown in FR-A-2407026, and even if such a frame could be constructed so as to be rigid enough, the plastics material rapidly deteriorates with wear and use, particularly around the edges of the openings through which the filtered particles pass.

### Object of the Invention

It is an object of this invention to provide an improved filtering screen, for example a filtering screen which can usefully be employed in a vibratory cradle.

The present invention also seeks to provide a screen which can be used in vibratory screening apparatus which possesses a high degree of simplicity of construction and with self-cleaning characteristics.

### Summary of the Invention

According to the present invention there is provided a filtering screen for mounting in a vibratory screening machine comprising a first wire mesh cloth overlying a second wire mesh cloth having a different mesh size and tension from the first, both cloths being secured to a frame to maintain the cloths in tension,
characterised by:
(i) a sheet metal plate (88) to which the wire mesh cloths are bonded and from which material has been removed by punching to leave a plurality of elongate apertures therein, and
(ii) edge regions (90, 92) of the apertures, protruding from the underside of the plate (88) and formed as a consequence of metal removal by punching,

wherein the protruding edge regions (90, 92) extend substantially normal to the plane of the plate, reinforce the edges of the apertures and increase the overall rigidity of the plate.

The invention is not limited to the use of only two screen meshes, and additional meshes having the same or different mesh size and so having the same or different tension may be incorporated by bonding over the first two mentioned meshes.

Preferably and if the screen is applied to a vibratory screening machine there is a third filter mesh superimposed on the second mesh and having a mesh which is relatively finer than the mesh of the second mesh, the third mesh also being adhesively secured at marginal edge portions around said frame, and the second and third meshes being capable of vibrating so as to strike each other and the first mesh to dislodge particles which would otherwise clog the screen as the support is vibrated.

The second and third meshes are preferably tensioned, each to a progressively lesser extent, so that the second mesh is tensioned by an amount less than the first and the third mesh is tensioned to an extent less than the second mesh.

The size of a screen is normally the same in both the warp and weft directions and is described by a number such as 100 which indicates the number of warp or weft strands per inch.

In a preferred embodiment the first mesh has a mesh size in the range 10 to 30, the second mesh has a mesh size in the range of 20 to 325 and the third mesh has a mesh size in the range of 30 to 325.

The figures of 40 and 325 are indicated as a typical maximum and minimum but the invention is not limited to screen cloths of 10 to 325 mesh and screen cloths outside that range may be used where the particle size requires.

In orderto provide forthe necessary rigidity in the first screen cloth, the latter is typically tensioned in the range of 50 to 90% of its ultimate tensile strength, the second screen cloth conveniently tensioned in the range of 10 to 80% of its ultimate tensile strength and the third screen cloth conveniently tensioned from 0 to 75% of its ultimate tensile strength.

In a typical triple cloth screen, the first cloth tension is 70%, the second cloth tension is 60% and the third cloth tension 55% of the ultimate tensile strength of the material from which the cloths are formed.

Other preferred features of the invention are defined in the dependent claims herein.

### Description of Drawings

The invention will now be described, by way of example, with reference to the accompanying drawings, in which:
Figure 1 is a perspective view of a filtering screen in general;
Figure 2 is a similar view of another such screen;
Figures 3 to 6 show differing screen constructions in cross-section as opposed to the invention;
Figure 7 illustrates a punched plate support according to the invention; and
Figure 8 is a cross-section on the line 15-15 in Figure 7;
Figure 9 is a cross-section on the line XVI-XVI in Figure 7;
Figure 10 is a cross-section through a screen constructed in accordance with the invention;
Figure 11 is a perspective view of a corner of another screen constructed in accordance with the invention.

### Detailed Description of Drawings

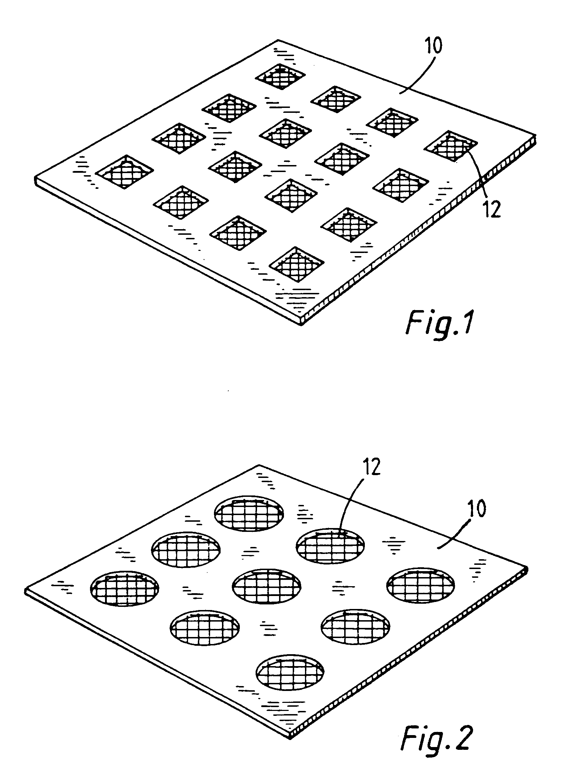

Figure 1 shows a filtering screen having a glass- fibre mat 10 formed by correspondingly apertured top and bottom layers between which are sandwiched in position at least two stainless steel wire meshes 12 bonded in position by layers of resin. Figure 2 shows an analogous screen, but with circular apertures in the mat 10 instead of square apertures.

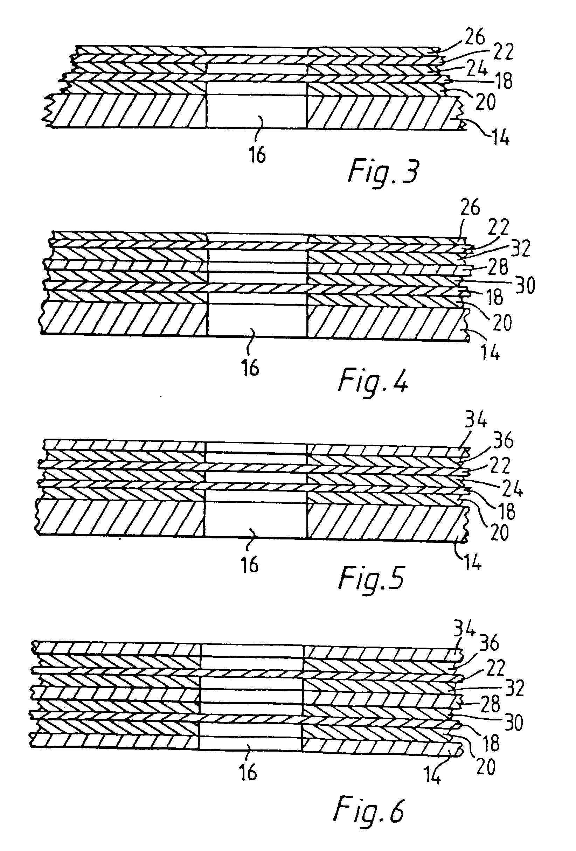

The details of one possible screen construction are shown in Figure 3. A resin mat 14 having apertures of which one is shown at 16 has a first wire mesh 18 bonded thereto by a resin layer 20. A second wire mesh 22 is bonded on top through a second resin layer 24. A thin resin layer 26 also exists on top of the second wire mesh.

The construction of Figure 4 is generally similar, but a thin fibreglass match forms a layer 28 bonded by resin layers 30 and 32 between the first and second meshes 18 and 22.

The construction of Figure 5 is also generally similar to that of Figure 3, but a thin fibreglass mat 34 is provided as a top layer, bonded in position by resin layer 36 on top of the second mesh 22.

The construction of Figure 6 utilises the thin fibreglass mat 28 of Figure 4 and the uppermost fibreglass layer 34 of Figure 5.

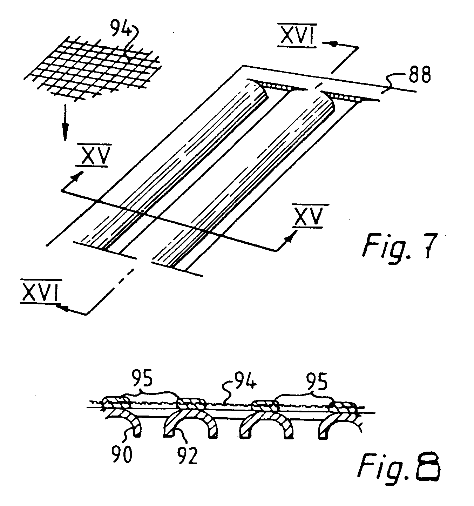

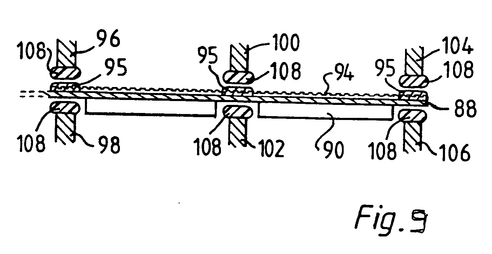

Figure 7 shows a support according to the invention in the form of a plate 88 which may be of sheet steel having apertures punched therein as best seen by comparing Figures 14 and 15. Each of the punchings causes not only an aperture to appear but also two lips of metal to protrude below the aperture as at 90 and 92 in Figure 8, which reinforce the edge regions of the apertures. The presence of these downturned lips also increases the overall rigidity of the sheet material 88.

Two or more such screen meshes such as 94 differently tensioned as required, are bonded to the upper surface of the sheet material using a suitable adhesive, as shown at 95.

In each embodiment described herein the screen meshes may be of woven wire and are tensioned before they are bonded to the chosen support, the latter serving to maintain the differential tensions in the meshes after assembly.

Where the rigidity of the plate 88 is insufficient to ensure the maintenance of the desired tensions in the screen cloths, it may be supported in a vibratory machine between upper and lower pairs of elongate supports, shown in section in Figure 9, at 96, 98, 100, 102 and 104. Rubber or other elastomeric material noses may to advantage be fitted to the ends of the supports 96, 98 etc, as indicated at 108. Conveniently, the supports are aligned with the bonded regions 95.

Whether rigid or not, all of the screens described herein are intended to be firmly clamped in a vibratory screening machine, in use.

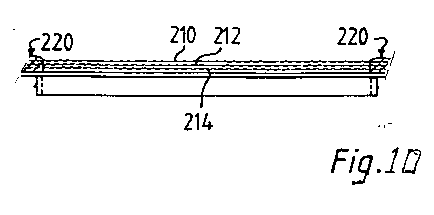

In a typical screen shown in cross-section in Figure 10 all three cloths 210, 212, 214 are formed from woven stainless steel wire. However, the invention is not limited to the use of stainless steel wire nor to the use of a common material for all three screen cloths, and the use of different materials for different cloths or of material other than from stainless steel wire for one or all of the three cloths is also envisaged.

Thus, for example, the first screen may be formed from stainless steel woven wire and the second and third screens may be formed from woven Nylon monofilament strands. (Nylon is a registered Trade Mark).

Bonding is achieved by epoxy resin at 220 although other suitable adhesives may also be used, and it is to be understood that the invention is not limited to the use of any particular adhesive material.

The resulting screen may be fitted in a vibratory sifting machine such as disclosed in GB-A-1575312 by clamping the screen at least along two edges and if desired along all four edges. However, the invention is not limited to use in such apparatus.

The screen of Figure 10 may be constructed by tensioning a first relatively coarse mesh screen cloth 214 over a frame having side members 216 and 218, applying an adhesive to the edge regions so as to bond the peripheral regions of the screen cloth to the flanges of the side members 216, 218 and to similar end members (not shown) of the rectilinear frame, superimposing a second screen cloth 212 over the first cloth, the second screen cloth having a relatively finer mesh and tensioning the latter to a lesser extent than the tension in the first coarse mesh cloth 214, applying a second layer of adhesive and bonding the second screen mesh in the same manner as the first, and thirdly, superimposing over the second screen cloth after the adhesive has cured, a third screen cloth 210 of even finer mesh than the second cloth 212, tensioning this third screen cloth 210 to a lesser extent than the second cloth 212 and applying a third layer of adhesive around the periphery of this third screen cloth 210 to secure it in place.

If desired, the three cloths may be separately tensioned over the frame and the adhesive applied in a single step.

The adhesive may be a heat curable adhesive.

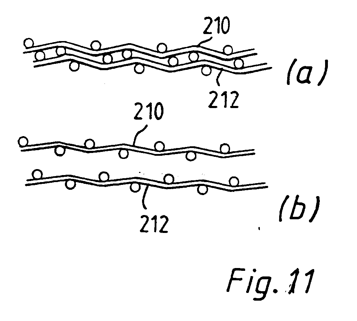

Figure 11 is a cross-section through part of two of the layers of screen cloth 210 and 212 of Figure 10 shown to an enlarged scale. The third cloth 214 is not shown. The screen mesh size of cloths 210 and 212 is substantially the same and in a static mode the two cloths will overlie as shown in Fiugre 11a with the warp and weft strands of the different cloths in general interlinking substantially as shown. In Figures 11a and 11b the relation between the wire diameter and the wire spacing is intentionally not shown to scale.

The highertension in the lower mesh and the lower tension in the upper mesh causes the meshes to separate as the screen moves in a downward direction and then snap together again on reversal of the motion, thereby causing particles on the upper mesh which would otherwise clog the openings therein, to be dislodged.

Additionally however, it is apparently important that the wires of the lower mesh interpose the majority of the openings in the upper mesh so that solids which would normally lodge in the openings in the upper mesh are prevented from doing so by the recurrent penetrations of the lower mesh into the openings of the upper mesh.

The thickness of the upper mesh also appears to be important in that the mesh must be thin enough to ensure that particles near to the hole size of the upper mesh (which would normally clog the latter) are prevented from penetrating sufficiently far into the upper mesh openings, to become lodged therein, by the recurrent penetration of the lower mesh wires therein.

The controlled differential tensions between the meshes allows the combined effect of the slapping action and the wire-hole penetration to provide an extremely effective self-cleaning action.

## Claims

1. A filtering screen for mounting in a vibratory screening machine comprising a first wire mesh cloth overlying a second wire mesh cloth having a different mesh size and tension from the first, both cloths being secured to a frame to maintain the cloths in tension,
characterised by:
(i) a sheet metal plate (88) to which the wire mesh cloths are bonded and from which material has been removed by punching to leave a plurality of elongate apertures therein, and (ii) edge regions (90, 92) of the apertures, protruding from the underside of the plate (88) and formed as a consequence of metal removal by punching,
wherein the protruding edge regions (90, 92) extend substantially normal to the plane of the plate, reinforce the edges of the apertures and increase the overall rigidity of the plate.

## Patentansprüche

1. Ein Filtersieb zur Anordnung in einer schwingenden Siebmaschine mit einem ersten Maschendrahtgewebe, das auf einem zweiten Maschendrahtgewebe aufliegt, das eine andere Maschenweite und eine andere Spannung als das erste aufweist, wobei beide Gewebe zum Aufrechterhalten einer Spannung in ihnen an einem Rahmen befestigt sind,
gekennzeichnet durch:
(i) eine Metallblechplatte (88), an der die Maschendrahtgewebe befestigt sind und aus der Werkstoff unter Belassung mehrerer langgestreckter Löcher durch Stanzen entfernt ist, und
(ii) Kantengebiete (90, 92) der Löcher, die von der Unterseite der Platte (88) abstehen und als Folge der Metallentfernung durch das Stanzen ausgebildet sind,
wobei die vorstehenden Kantengebiete (90, 92) in einer Ebene im wesentlichen senkrecht zu der Platte verlaufen, die Kanten der Löcher verstärken und die Gesamtfestigkeit der Platte erhöhen.

## Revendications

1. Un tamis de filtration destiné à être monté dans une machine de tamisage à vibration comprenant une première toile en fil métallique recouvrant une seconde toile en fil métallique ayant une taille de mailles et une tension différentes de la première, les deux toiles étant fixées à un cadre pour maintenir les toiles en tension,
caractérisé par
(i) une plaque en tôle (88) sur laquelle les toiles en fil métallique sont fixées et de laquelle de la matière a été enlevée par poinçonnage pour laisser un ensemble d'ouvertures allongées, et
(ii) des régions de bords (90, 92) des ouvertures, faisant saillie à partir de la face inférieure de la plaque (88) et qui sont formées sous l'effet de l'enlèvement de métal par poinçonnage,
dans lequel les régions de bord en saillie (90, 92) s'étendent de façon pratiquement normale au plan de la plaque, renforcent les bords des ouvertures et augmentent la rigidité globale de la plaque.
